(19) Europäisches Patentamt
European Patent Office
Office européen des brevets

(11) **EP 3 992 907 B1**

(12) # EUROPEAN PATENT SPECIFICATION

(45) Date of publication and mention of the grant of the patent:
**09.07.2025 Bulletin 2025/28**

(21) Application number: **21204336.8**

(22) Date of filing: **22.10.2021**

(51) International Patent Classification (IPC):
**G06T 7/50** *(2017.01)* **G06T 7/70** *(2017.01)*

(52) Cooperative Patent Classification (CPC):
**G06T 7/70; G06T 7/50;** G06T 2207/10024;
G06T 2207/10028; G06T 2207/30128;
G06T 2207/30196

(54) **METHOD FOR MONITORING TARGET**

VERFAHREN ZUR ZIELÜBERWACHUNG

MÉTHODE DE SURVEILLANCE D'UNE CIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.10.2020 IT 202000025498**

(43) Date of publication of application:
**04.05.2022 Bulletin 2022/18**

(73) Proprietor: **Geoinference S.r.l.**
**38068 Rovereto, (TN) (IT)**

(72) Inventors:
 • **Maffione, Eugenio Maria**
  **38068 Rovereto TN (IT)**
 • **Demaria, Andrea**
  **38068 Rovereto TN (IT)**

(74) Representative: **Perani & Partners S.p.A.**
**Piazza Armando Diaz, 7**
**20123 Milano (IT)**

(56) References cited:
 • **HANWEN KANG ET AL: "Real-time Fruit Recognition and Grasp Estimation for Autonomous Apple harvesting", ARXIV.ORG, CORNELL UNIVERSITY LIBRARY, 201 OLIN LIBRARY CORNELL UNIVERSITY ITHACA, NY 14853, 30 March 2020 (2020-03-30), XP081631497**

 • **ADARSH JAGAN SATHYAMOORTHY ET AL: "COVID-Robot: Monitoring Social Distancing Constraints in Crowded Scenarios", ARXIV.ORG, CORNELL UNIVERSITY LIBRARY, 201 OLIN LIBRARY CORNELL UNIVERSITY ITHACA, NY 14853, 14 August 2020 (2020-08-14), XP081742097**
 • **ANONYMOUS: "Minimum bounding box - Wikipedia", 5 October 2020 (2020-10-05), pages 1 - 3, XP055814325, Retrieved from the Internet <URL:https://en.wikipedia.org/w/index.php?title=Minimum_bounding_box&oldid=981946359> [retrieved on 20210616]**
 • **LIN GUICHAO ET AL: "Color-, depth-, and shape-based 3D fruit detection", PRECISION AGRICULTURE, SPRINGER US, BOSTON, vol. 21, no. 1, 30 March 2019 (2019-03-30), pages 1 - 17, XP036986676, ISSN: 1385-2256, [retrieved on 20190330], DOI: 10.1007/S11119-019-09654-W**
 • **YU YANG ET AL: "Real-Time Visual Localization of the Picking Points for a Ridge-Planting Strawberry Harvesting Robot", IEEE ACCESS, IEEE, USA, vol. 8, 17 June 2020 (2020-06-17), pages 116556 - 116568, XP011796307, DOI: 10.1109/ACCESS.2020.3003034**

**EP 3 992 907 B1**

**Description**

*Technical Field*

The present invention relates to a method for monitoring targets, for example people and objects, present in an environment in order to identify them and determine their position with respect to a reference point, their relative position and their dimensions. The present invention also relates to an imaging device capable of implementing the method for monitoring targets.

*State of the Art*

Several types of devices are known from the state of the art which, by exploiting algorithms based on neural networks, identify and recognize targets present in an environment. These algorithms associate a boundingbox with the different targets and subsequently employ segmentation algorithms, associated with neural networks, to recognize their contours. In certain cases, depth information is also known to be acquired in order to associate spatial coordinates with the different recognized targets for later use.

Publication "Real-time Fruit Recognition and Grasp Estimation for Autonomous Apple harvesting" 2020 to Hanwen Kang and Chao Chen presents a neural network based visual perception framework for autonomous apple harvesting from RGB-D images. Publication "COVID-Robot: Monitoring Social Distancing Constraints in Crowded Scenarios" 2020 to Adarsh Jagan Sathyamoorthy et al. presents a deep leaning - based method for automatically detecting from RGB-D images pairs of humans in a crowded scenario who are not adhering to the social distance constraint.

*Problems of the prior art*

Known algorithms based on neural networks and used for recognizing and defining target contours require a high computational cost that makes them difficult to manage.

In addition, the boundingboxes associated with the different targets may have deviations from the target, incorrect orientations with respect to the target, and/or dimensions that are larger or smaller than the target. Such boundingbox incorrections cause an incorrect handling of the acquired information and require computationally expensive segmentation algorithms to correct them.

In addition, it should be noted that depth information is handled passively by the algorithms, not guaranteeing the correct association of the depth information with each pixel as well as the difficulty in handling undefined depths. In fact, it happens that "masking" phenomena occur during the acquisition of depth values, which are due for example to the "disparity" between two successive images or acquisition problems mainly at the edges thereof. Such maskings cause the acquisition of depth information to be missed. This fact leads to an incorrect association of spatial coordinates with the target and therefore to an incorrect definition of the target itself.

*Object of the Invention*

The object of the present invention is to realise a method and a device capable of overcoming the above mentioned drawbacks of the prior art.

In particular, the object of the present invention is to provide a method capable of improving the handling of the acquired depth information as well as the identification of targets and their mutual position.

The specified technical task and the specified purposes are substantially achieved by a method for monitoring targets and an imaging device, comprising the technical characteristics set out in one or more of the appended claims.

*Advantages of the invention*

Advantageously, the method and the device of the present invention allows to overcome the lack of information related to depth.

Advantageously, the method and the device of the present invention make it possible to refine and orient the boundingboxes associated with the recognized targets while reducing the necessary computational cost.

Advantageously, the method and the device of the present invention enable to define the contours of the recognized targets while reducing the necessary computational cost.

Advantageously, the method and the device of the present invention allow the relative distance between several targets to be determined.

BRIEF DESCRIPTION OF THE DRAWINGS

Further features and advantages of the present invention will become clearer from the indicative and therefore non-limiting description of a preferred but not exclusive embodiment of a method for monitoring targets and an imaging device as illustrated in the accompanying drawings:

- figure 1 shows a block diagram of the monitoring method according to a general embodiment of the present invention;
- figure 2 shows a block diagram of the monitoring method according to an embodiment of the present invention;
- figure 3 shows a block diagram of the monitoring method according to an embodiment of the present invention;
- figure 4 shows an imaging device in accordance with the embodiment of figure 2;
- figure 5 shows an imaging device in accordance with the embodiment of figure 3;

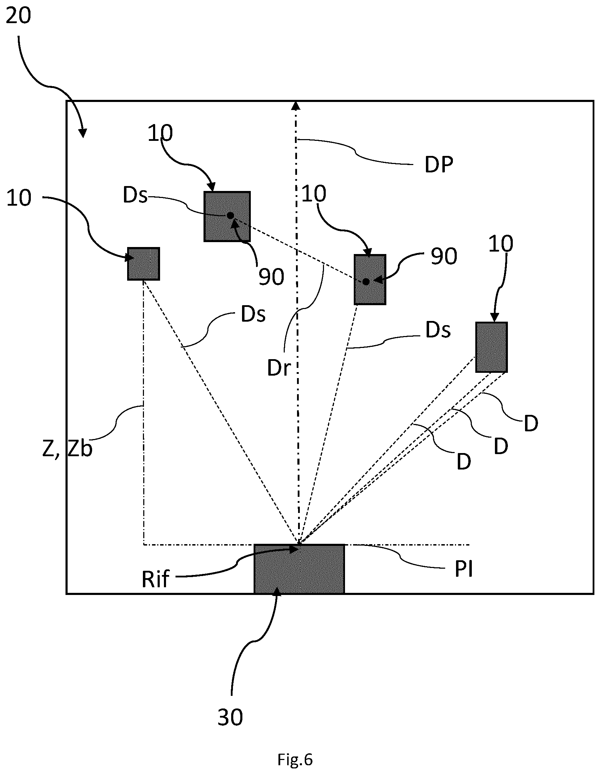

- figure 6 schematically shows a top view of an environment in which an imaging device is inserted according to an embodiment of the present invention;

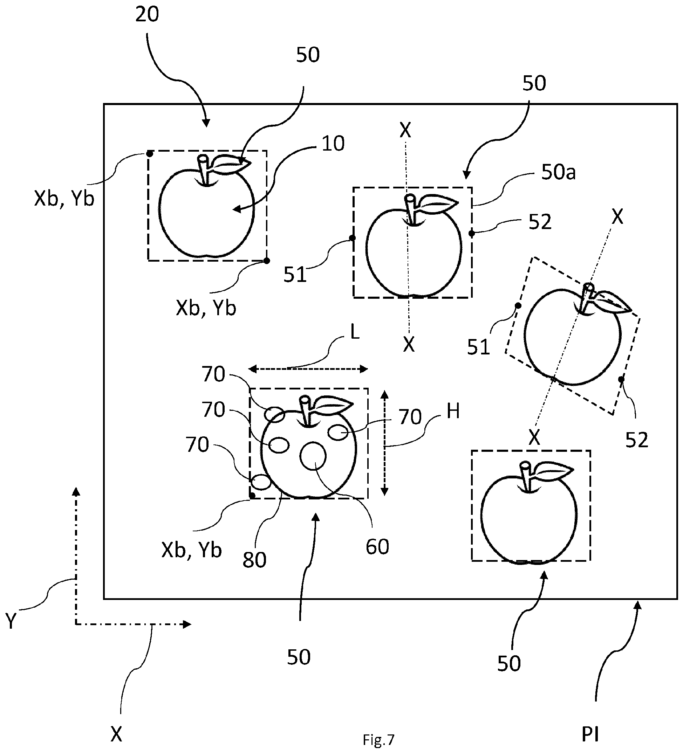

- figure 7 schematically shows an acquired image to which boundingboxes are associated,

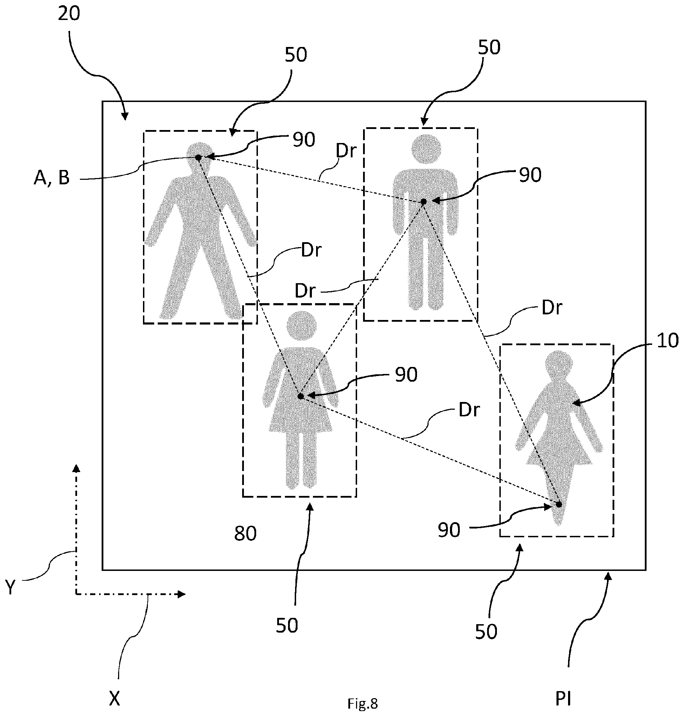

- figure 8 schematically shows a further acquired image to which boundingboxes are associated.

DETAILED DESCRIPTION

Even when not explicitly highlighted, the individual features described with reference to the specific embodiments must be considered as accessories and/or exchangeable with other features, described with reference to other embodiments.

The present invention relates to a method for monitoring targets 100 arranged in an environment 20. Preferably, the method for monitoring targets 100 is carried out by means of an imaging device 30, described in detail below. The method subject-matter of the present invention allows to detect targets 10 present in the environment 20 and to correct errors due to the acquisition of data, preferably associated with the acquired images and depth information.

For the purposes of the present invention, a target 10 means any object, subject and entity present in an environment 20. For example, target 10 could refer to fruit and vegetable products and/or people and/or animals.

For the purposes of the present invention, environment 20 means any place framed by the imaging device 30 such as an orchard and/or a square or a street.

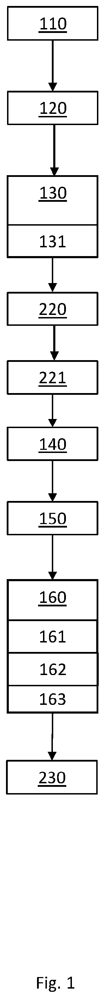

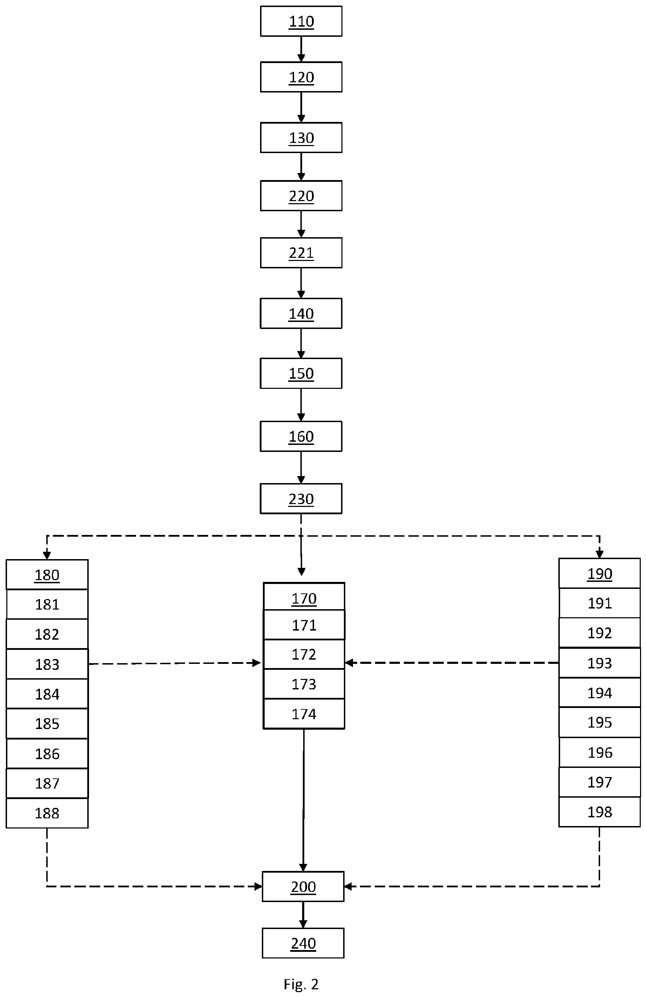

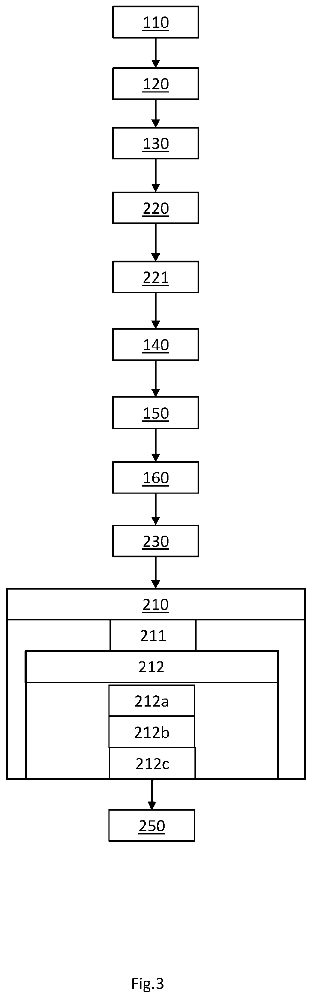

The method for monitoring targets 100 subject-matter of the present invention comprises the following steps, carried out according to a preferred embodiment and shown in figure 1 and in subsequent figures 2 and 3.

The method for monitoring targets 100 comprises a step of defining 110 a reference system Rif with respect to the imaging device 30. In particular, the reference system Rif defines a plane of the image PI, preferably associated with the imaging device 30, and a depth dimension DP extending from the plane of the image PI, preferably from the imaging device 30. More preferably, the reference system Rif defines the plane of the image PI on two-dimensional images acquired by the imaging device 30 and the depth dimension DP along which a distance value D from the plane of the image PI is measurable. Even more preferably, the reference system Rif allows to define spatial coordinates X and Y on the plane of the image PI and Z on the depth dimension DP.

The method for monitoring targets 100 comprises a step of acquiring 120 by means of the imaging device 30 a first image stream and a second image stream. In particular, the first image stream is related to the environment 20. Preferably, the first image stream comprises two-dimensional colour images of the environment 20. It should be noted that each image in the first image stream is defined by a plurality of pixels. In other words, the first image stream comprises a plurality of temporally successive frames. As regards the second image stream, it is related to distance values D of the pixels from the reference system Rif. In other words, the second image stream detects distance values D from the reference system Rif to the targets 10 present in the environment 10. Preferably, the second image stream comprises a plurality of distance values D that can be associated with the image pixels of the first image stream. More preferably, the second image stream comprises a plurality of frames each comprising a plurality of distance pixels each associated with a distance value D, if detected. In particular, the second image stream comprises a plurality of temporally successive frames comprising distance values.

It should be noted that each image in the first image stream is associated with the plane of the image PI and each distance value D is associated with the depth dimension DP.

Preferably, the step of acquiring 120 provides for acquiring the first image stream and the second image stream present in the Field of View (FOV) of the imaging device 30.

The method for monitoring targets 100 comprises a step of sending 130 the first image stream and the second image stream to a data processing unit 40. Preferably, the step of sending 130 provides for sending, from the imaging device 30 to the data processing unit 40 in signal communication with the imaging device 30, the first image stream and the second image stream acquired. More preferably, the method for monitoring targets 100 comprises a step of storing 131 the first image stream and the second image stream in the data processing unit 40 at least temporarily. In particular, the temporary storage of the first image stream and of the second image stream optimises the computational resources for the subsequent steps.

In accordance with a preferred embodiment, the method for monitoring 100 comprises a step of synchronising 220 the first image stream and the second image stream. Preferably, the synchronisation step 220 provides for associating each pixel of the images of the first image stream with a corresponding distance value D of the second image stream.

Preferably, the method for monitoring targets 100 comprises a step of storing 221 the synchronisation between the first image stream and the second image stream carried out at the step of synchronising 220.

The method for monitoring targets 100 comprises a step of recognizing 140 one or more targets 10 present in the images of the first image stream. Preferably, the step of recognizing 140 provides for analysing each image of the first image stream to recognize the targets 10 present in the relative image. It should be noted that the step of recognizing one or more targets 140 provides for recognizing one or more targets 10 with respect to a background.

The step of recognizing one or more targets 140 present in the images of the first image stream is carried out by means of an algorithm based on neural networks and associated with the environment. Preferably, the algorithm based on neural networks is optimised in the size, in particular quantized. More preferably, the algorithm based on neural networks is trained to recognize one or more targets 10 present in the images of the first image stream. Even more preferably, the algorithm based on neural networks is configured, in other words trained, to recognize specific targets 10 as a function of the environment 20. For example, if the first image stream is acquired in an orchard, the algorithm based on neural networks can be trained to recognize the species of fruit present in the orchard. Or, for example, if the first image stream is acquired in a street or square, the algorithm based on neural networks is trained to recognize people.

Advantageously, the use of an algorithm based on neural networks configured to recognize targets 10 in a specific environment 20 reduces the computational cost required.

The step of recognizing 140 comprises the steps of geolocating the imaging device 30 in order to recognize the environment in which the imaging device 30 is inserted. Subsequently, once the environment has been recognized it comprises a step of loading the algorithm based on neural networks suitable for the recognized environment.

Advantageously, loading a specific algorithm enables the adaptability of the method to different types of environment while maintaining a reduced computational cost.

The method for monitoring targets 100 comprises a step of associating 150 a boundingbox 50 with each recognized target 10. In particular, the step of associating 150 provides for the insertion of a recognized target 10 into a boundingbox 50. In detail, one or more boundingboxes 50 are identified on each image of the first image stream as a function of the recognized targets 10. Preferably, each boundingbox is associated with boundingbox coordinates Xb, Yb, Zb on the plane of the image as a function of the reference system Rif. More preferably, each boundingbox is associated with spatial coordinates with respect to the reference system.

For the purposes of the present invention, boundingbox 50 means a quadrilateral, for example a square or rectangle, parellelogram, which contours the target to which relative pixels of the images of the first image stream are associated. It should be noted that each boundingbox 50 has a plurality of sides, preferably four, to which pixels are associated.

For the purposes of the present invention, the lengths of the sides, for example height H and width L, of the boundingboxes 50 are measured as a function of the pixels associated therewith as a function of the reference system Rif.

Preferably, the boundingbox coordinates Xb, Yb, Zb comprise the position of the pixel on the plane of the image associated with opposite angles of the boundingbox with respect to the diagonal. Alternatively, the boundingbox coordinates comprise only the position of an angle and values of widths L and height H in pixels of the boundingbox 50.

More preferably, each boundingbox 50 is associated with an outer perimeter 50a contouring the identified target 10.

It should be noted that each boundingbox 50 comprises a plurality of pixels preferably delimited within the outer perimeter 50a.

In accordance with a preferred embodiment, the step of associating a boundingbox 140 also provides for associating a recognition label and a confidence level to each target. Specifically, the confidence level is associated with how certain of the object recognition the recognition carried out in the recognition step 130 is and is defined as a function of the algorithm based on neural networks.

The method for monitoring targets 100 comprises a step of calculating 160 a significant distance value Ds of the boundingboxes 50 with respect to the reference system Rif as a function of the second image stream.

Preferably, the step of calculating 160 a significant distance value Ds comprises the steps of checking 161 the availability of a distance value D for each pixel of the boundingboxes 50. A subsequent step of associating 162 for each pixel of each boundingbox 50 a respective distance value D if available. Specifically, the step of associating 162 provides for checking the availability of a distance value D for each pixel associated with the boundingbox 50. Thereafter, the step of calculating 160 a significant distance value Ds comprises the step of determining 163 each significant distance value Ds as a function of the pixels associated with a distance value D. Preferably, the step of determining 163 each significant distance value Ds provides for discarding the pixels of the image of the first image stream lacking the relative distance value D. If, the number of pixels of the image of the first image stream lacking the corresponding distance value D exceed a minimum threshold value, the determining step 163 provides for discarding the relative boundingbox 50.

It should be noted that in accordance with a preferred embodiment of the present invention, the calculating step 160 provides for calculating the significant distance of each boundingbox having a confidence level higher than a threshold confidence value. Specifically, the calculating step 160 provides for a first step of selecting each boundingbox 50 to which a confidence level higher than a threshold confidence value is associated.

More preferably, the method for monitoring targets 100 comprises a step of storing 230 the significant distance values Ds calculated at step 160.

In accordance with a preferred embodiment of the method, illustrated in figure 2, the significant distance Ds corresponds to the mean or median of the distances D associated with the pixels of the respective boundingbox 50 of the images of the first image stream.

The mean or the median represents the reference distance of the detected object as a whole. This measure is taken into account by the method when assessing the dimensions and/or the distance between the other recognized targets 10.

Preferably, the method for monitoring targets 100 comprises a step of orienting 170 the boundingboxes 50 on the recognized target.

Advantageously, the correct orientation of the boundingbox 50 on the recognized target improves and facilitates the subsequent steps.

The orientation step 170 comprises a step of associating 171 the relative outer perimeter 50a to at least one boundingbox 50. Subsequently, the orientation step 170 comprises the step of selecting 172 at least two perimeter points 51, 52 on said outer perimeter 50a. It should be noted that perimeter points 51, 52 refer to the spatial coordinates on the plane of the image PI of the pixels associated with them. Preferably, the perimeter points 51, 52 are substantially in positions facing the outer perimeter 50a. Once the points have been selected, the orientation step 170 comprises a step of determining 173 a reference axis X-X as a function of the target 10 recognized and associated with the related boundingbox 50. Preferably, the determination of the reference axis X-X depends on the recognized target 10. For example, if the target were an apple, the reference axis could be the one associated with the core itself. Finally, the orientation step 170 comprises the step of orienting 174 the outer perimeter 50a of the boundingbox 50 on the target 10 as a function of the reference axis X-X and of the perimeter points 51, 52. Preferably, the orientation step 174 provides for rotating and/or deforming the boundingbox 50 as a function of the perimeter points 51, 52 and of the reference axis X-X.

In accordance with a preferred embodiment, the method for monitoring targets 100 comprises a step of defining in plan the contours of a recognized target 180 as a function of the first image stream. In particular, the step of defining in plan the contours 180 provides for defining the contours of a target 10 within a boundingbox 50 on the image of the first image stream as well as on the two-dimensional colour image. In detail, the step of defining in plan the contours 180 allows the contours to be defined on the plane of the image associated with the first image stream. In other words, the step of defining in plan the contours 180 allows the target 10 to be distinguished from the background. Preferably, the step of defining in plan the contours 180 comprises the step of selecting 181 at least one boundingbox 50 with which the outer perimeter 50a is associated. Subsequently, the step of defining in plan the contours 180 comprises a step of selecting 182 a starting area 60 on the recognized target 10 within the outer perimeter 50a of the boundingbox 50. Preferably, the starting area 60 is substantially in the geometric centre of the outer perimeter 50a of the boundingbox 50 and comprises one or more image pixels of the first image stream. In this way, the selection of a starting area 60 makes it possible to identify one or more distinctive marks of the target such as for example the colour. After selecting the starting area 60, the step of defining in plan the contours 180 comprises the step of associating 183 with the starting area 60 first plan target parameters associated with the first image stream. In particular, the first plan target parameters are related to the distinctive marks of the target such as its colour. The step of defining in plan the contours 180 comprises the steps of:

- selecting 184 a plurality of reference areas 70 within the outer perimeter 50a of the boundingbox 50; and of
- associating 185 with each reference area 70 second plan target parameters associated with the first image stream. It should be noted that the second target parameters are related to the distinctive marks of the target or of the background. Preferably, the steps of associating 183 and 184 first and second plan target parameters are carried out by means of algorithms based on neural networks configured to search for and recognize distinctive marks on the image of the first image stream.

In this way, the step of defining in plan the contours 180 allows a variation between the first plan target parameters and the second plan target parameters to be recognized. Subsequently, the step of defining in plan the contours 180 comprises the step of comparing 186 the first plan target parameters with the second plan target parameters in order to detect variations beyond the first threshold parameters and thus generate 187 a contour value if the comparison exceeds the first threshold parameters. Specifically, the step of generating 187 a contour value provides for generating this value when the second threshold parameters are associated with the background rather than with the target 10. Finally, the step of defining in plan the contours 180 comprises the step of delineating 188 the contour 80 of the target 10 as a function of the contour values.

In accordance with a preferred embodiment alternative to the previous one but combinable therewith, the method for monitoring targets 100 comprises a step of defining in depth the contours of a recognized target 190 as a function of the second image stream. It should be noted that the step of defining in depth the contours of a recognized target 190 comprises substantially the same steps as the step of defining in plan the contours of a recognized target 180 but using the information associated with the distance D of the pixels from the reference system Rif.

Preferably, the step of defining the contours 190 in depth comprises the steps of:

- selecting 191 at least one boundingbox 50 to which an outer perimeter 50a is associated;
- selecting 192 a starting area 60 on the recognized target 10 within the outer perimeter 50a of the boundingbox 50. Preferably, the starting area 60 is substantially in the geometric centre of the outer perimeter 50a of the boundingbox 50 and comprises one or more distance values D associated with the second image stream. In this way, the selection of a starting area 60 makes it possible to identify one or more distinctive marks of the target such as the same distance from the reference system Rif,
- associating 193 with the starting area 60 first depth target parameters associated with the second image stream. These first depth parameters being associated with the distance from the reference system Rif;
- selecting 194 a plurality of reference areas 70 within the outer perimeter 50a of the boundingbox 50;
- associating 195 with each reference area 70 second depth target parameters associated with the second image stream. It should be noted that the second depth target parameters are related to the distinctive marks of the target or of the background;
- comparing 196 the first depth target parameters with the second depth target parameters. It should be noted that the comparison is preferably a function of the significant distance Ds calculated on the target 10 and the related first and second depth target parameters;
- generating 197 a contour value if the comparison exceeds depth threshold parameters;
- delineating 198 the contour 80 of the target as a function of the contour values.

Advantageously, the step of defining in plan the contours of a recognized target 180 and the step of defining in depth the contours of a recognized target 190 allow the contours of recognized targets to be defined while reducing the required computational cost.

Advantageously, the definition of a boundingbox 50 associated with a recognized target speeds up the definition of the contours 80 of the targets 10 in computational terms.

Preferably, the step of defining in plan the contours of a recognized target 180 and the step of defining in depth the contours of a recognized target 190 are performed by computer vision-based algorithms and/or depth-based algorithms. For example, a computer vision-based algorithm may be a random walker algorithm. It should be noted that the step of defining in plan the contours of a recognized target 180 and the step of defining in depth the contours of a recognized target 190 can also be based on specific neural networks for segmentation.

In accordance with a preferred embodiment, the step of orienting the boundingboxes 170 is carried out as a function of the definition of the contour 80 of the target. In particular, the boundingbox 50 is oriented and redefined on the basis of the contours 80 of the relative target 10.

In accordance with a preferred embodiment, the method for monitoring targets 100 comprises a step of calculating 200 the dimensions of the recognized targets 10 as a function of the boundingbox 50 with which the relative pixels of the first image stream and/or the distances D of the second image stream are associated. Specifically, the step of calculating 200 provides for calculating the dimensions, preferably in millimetres, of each boundingbox 50. In detail, the dimensions refer to the lengths in pixels of the sides of a boundingbox 50. It should be noted that the calculating step 200 can be carried out both on the boundingbox 50 associated with the target 10 at step 150 and on the boundingbox 50 oriented at step 170 as well as on the boundingbox 180 oriented following the definition of the contour 80.

Preferably, the calculating step 200 provides for associating to the boundingbox 50 the dimensions of the boundingbox, for example height H and width L, and optionally the significant distance Ds, in the present embodiment represented by the median or the mean.

Advantageously, the dimensions of the boundingbox 50 associated with specific targets make it possible to define limit thresholds for certain operations as well as further characteristics of the target. In a first case, the volume and the weight of the target 10 can be calculated as a function of its specific weight identified by the environment in which the imaging device 30 is placed. For example, if the imaging device 30 were positioned in an apple orchard, the algorithms employed and trained on apple recognition could comprise additional data such as the average weight of the apples with certain dimensions and/or the specific weight of the apples themselves and determine the weight of the targets by means of known algorithms. In a second case, it is possible to intervene if the calculated dimensions exceed a threshold limit, such as when grinding gravel in a quarry and to have a control over the grain size, when measuring the dimensions of artificial snowflakes or when measuring farmed fish.

More preferably, the method for monitoring targets 100 comprises a step of storing 240 the data generated in steps 170, 180, 190 and 200 such as the recognized targets, the boundingboxes, the target contours and the target dimensions produced in steps 170, 180, 190 and 200.

In accordance with a preferred embodiment illustrated in Figure 3 and alternative to the embodiment illustrated in Figure 2 but combinable, the method for monitoring targets 100 comprises a step of determining the relative distance between two or more targets identified by a boundingbox 210.

Advantageously, the relative distance between more targets 10 makes it possible to take into account, for example, the correct distance between two or more individuals or to evaluate density values of fruit clusters in an orchard.

The step of determining the relative distance between two or more targets identified by a boundingbox 210 comprises the step of defining 211 for each boundingbox 50 at least one significant point 90. Preferably, the significant point 90 is identifiable with the centroid of the relative boundingbox 50. In particular, the step of defining 211 for each boundingbox 50 at least one significant point 90 provides for associating the significant distance value Ds relative to the boundingbox to the significant point 90. In accordance with the present embodiment, the significant distance value Ds is equal to the average distance of the significant point 90 from the reference system Rif. Subsequently, the step of defining 211 for each boundingbox 50 at least one significant point 90 provides for assigning two spatial plan coordinates A, B to the significant point 80 with respect to the reference system Rif. In detail, the step of defining 211 for each boundingbox 50 at least one significant point 90 associates three spatial coordinates to each significant point 90.

For the purposes of the present invention, the centroid can be replaced by other significant points 90 of the boundingbox as a function of the target. For example, in the case of measuring social distancing, the significant point may be the position of a subject's feet, head or upper torso.

Upon identifying the significant point 90 and associating significant distance Ds and spatial plan coordinates A, B, the step of determining the relative distance Dr between two or more targets 10 identified by a boundingbox 210 comprises the step of calculating 212 the relative distance Dr between the significant points 90 of each boundingbox 50. The step of determining the relative distance Dr between two or more targets identified by a boundingbox 210 comprises the step of generating 213 an evaluation signal as a function of the relative distance Dr between the significant points 90 of each boundingbox 50 and threshold evaluation values.

Preferably, the method for monitoring images 100 comprises a step of generating an alarm signal if an evaluation signal linked to the trespassing of minimum threshold values by the relative distance Dr is generated. For example, when the method is applied to social distancing. Alternatively, the method for monitoring images 100 comprises a step of processing the evaluation signal in order to extrapolate information from the targets e.g. fruit density in an orchard.

In accordance with a preferred embodiment, the step of calculating the relative distance Dr between significant points of each boundingbox 212 comprises the sub-steps of determining 212a a relative distance Dr in the space between two significant points 90. Preferably, the relative distance is calculated by defining a vector of spatial coordinate values as a function of the reference system Rif for each significant point 90. Subsequently, step 212a provides for calculating the relative distance between two boundingboxes by means of known algorithms, such as using the Euclidean distance (shown below).

$$d(A, B) = \sqrt{(x_B - x_A)^2 + (y_B - y_A)^2 + (z_B - z_A)^2}$$

Where:

d(A, B) is the relative distance between two significant points;
x, y, z are the spatial coordinates of the significant points

Preferably, the relative distance Dr is calculated between two different boundingboxes 50 only once. More preferably, a matrix of relative distances is constructed using the vectors of the spatial coordinate values Dr. In detail, the values of the main diagonal and of the lower or upper triangle are set at higher values than the threshold values avoiding the repetitive calculation of relative distances Dr between two significant points 90. In this way, the calculation of the relative distances Dr is optimised as the complexity of the calculation itself is reduced. It should be noted that the relative distance matrix has columns and rows equal to the number of boundingboxes 50 for which the relative distance Dr is calculated.

Preferably, the step of calculating the relative distance between significant points of each boundingbox 212 comprises the sub-step of defining 212b a calculation matrix by means of the squares of the relative distances Dr between significant points 90 of different boundingboxes 50. For example, using the squared Euclidean distance formula:

$$d(A, B)^2 = \quad (x_B - x_A)^2 + (y_B - y_A)^2 + (z_B - z_A)^2$$

Finally, the step of calculating the relative distance Dr between significant points 90 comprises the sub-step of comparing 212c the square of the distance Ds with the square of the evaluation threshold values.

It should be noted that in accordance with a preferred embodiment of the present invention, the step of determining the relative distance Dr between two or more targets identified by a boundingbox 210 provides for calculating the relative distances Dr between boundingboxes 50 associated with recognized targets 10 and associated with objects and/or subjects of interest. For example, if the monitoring method were used in the evaluation of interpersonal distance, the targets of interest would comprise people.

More preferably, the method for monitoring targets 100 comprises a step of storing 250 the data generated by step 210 such as the relative distances Dr, the evaluation and alarm signals.

In accordance with a preferred embodiment, the method for monitoring targets 100 is applicable to targets 10 that are stationary and/or moving in an environment 20 with respect to the reference system Rif as well as with respect to the imaging device 30. It should be noted that the method for monitoring targets 100 can be applied by moving the imaging device 30 with respect to stationary and/or moving targets 10.

For the purposes of the present invention, the method for monitoring images 100 comprises a debugging/testing step in order to control the steps of the method. In particular, the debugging/testing step comprises the steps of:

- Displaying the first image stream and the second image stream;
- Analysing, editing, selecting each image from the first image stream and the second image stream
- Storing each image of the first image stream and the second image stream
- Tracking of metrics for each step performed on the first image stream and the second image stream
- Changing the logging level.

Advantageously, the debugging/testing step makes it possible to improve and optimise the method for monitoring targets 100.

It should be noted that this debugging/testing step is applicable to each step of the method for monitoring targets 100.

An imaging device 30 configured to implement the method for monitoring targets 100 is a further object of the present invention.

The imaging device comprises a camera 31 configured to acquire the first image stream and the second image stream. In particular, the camera 31 is configured to film the environment in which it is placed.

In accordance with a preferred embodiment, the camera 31 comprises optical sensors, for example RGB for colour filming of the first image stream, and one or more infrared sensors for infrared filming for the second image stream. Preferably, the optical and infrared sensors comprise a shutter of the global shutter type, free from "creep" phenomena when filming in motion. The optical and infrared sensors can have a specific Field of View (FOV) representing the horizontal and vertical viewing angle that each sensor supports. In other words, the optical sensors and the infrared sensors have a FOV capable of determining the filmed area given a distance of the filmed environment.

In this way, the use of optical and infrared sensors allows, thanks to the method, to generate a combined image stream in which each pixel of the first image stream is associated with a distance value, if available according to the steps described above.

Preferably, the camera 31 is configured to work at an adjustable frame rate and as a function of the environment in which the camera 31 is inserted, and as a function of any movements of the camera with respect to the environment.

In accordance with the present invention, the camera is of the RGB-D type.

In accordance with an alternative embodiment, the imaging device comprises a camera for two-dimensional colour filmings (first image stream) and depth sensors (second image stream). Advantageously, the method for monitoring 100 allows the combination of the first and second image stream.

The imaging device 30 comprises a data processing unit 40 in signal communication with the camera 31. The data processing unit 40 is configured to receive the first image stream and the second image stream and process them by performing the aforesaid steps of the method for monitoring targets 100.

In accordance with a preferred embodiment, the data processing unit 40 comprises a memory module (Redis) configured to receive data, such as the first image stream and the second image stream, and processed data such as the boundingboxes 50 and to save them. The data processing unit 40 comprises a synchronisation module (Frame splitter), in signal communication with the memory module Redis, and configured to synchronise the first image stream and the second image stream. This synchronisation module Framesplitter is also configured to save synchronisations on the memory module Redis. The data processing unit 40 further comprises a detection module (Detect), in signal communication with the memory module Redis and configured to recognize targets and associate relative boundingboxes 50 to the recognized targets 10. Preferably, the algorithm based on neural networks is resident in the detection module, Detect. More preferably, the detection module Detect is in signal communication with a geolocation module so as to receive a specific algorithm based on neural networks as a function of the environment in which the imaging device 30 is inserted. It should be noted that the detection module Detect is configured to save the recognized targets 10 and the boundingboxes 50 generated in the memory module Redis.

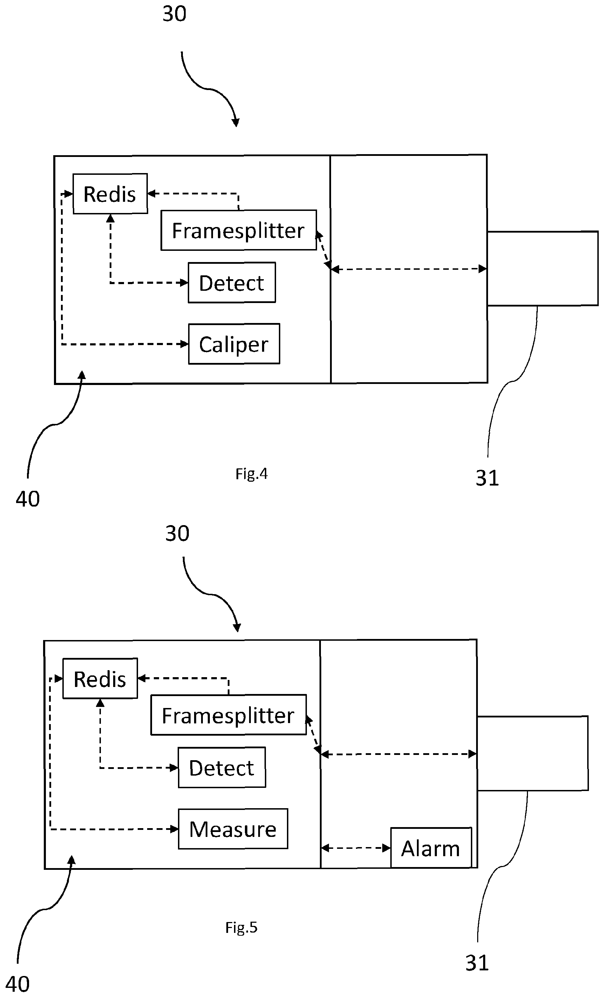

In accordance with the embodiment of figures 2 and 4, the data processing unit 40 comprises a caliper module (Caliper) in signal communication with the memory module Redis and configured to calculate the significant distance Ds, orient the boundingboxes 50, define in plan or in depth contours and calculate the dimensions of the recognized targets 10. The caliper module Caliper is also configured to save the data generated in the memory module Redis.

In accordance with the embodiment of Figures 3 and 5, the data processing unit 40 comprises a measurement module (Measure) in signal communication with the memory module Redis and configured to determine the relative distance Dr between boundingboxes 50 and save them in the memory module Redis.

In accordance with a preferred embodiment, the imaging device 30 comprises an alarm module (Alarm) in signal communication with the data processing unit 40, preferably with the memory module Redis, and configured to generate evaluation signals and/or alarm signals as a function of the threshold values.

In accordance with a preferred embodiment, the imaging device 30 comprises a remote control module in signal communication with a device external to the imaging device 30 and associated with a user. Preferably, the remote control module is configured to remotely control the imaging device 30 and allow the display of the data saved in the memory module Redis.

It should be noted that the imaging device 30 subject-matter of the present invention is advantageously applicable in the fields of social distancing and in agriculture as well as in the dimensional evaluation of targets such as grains of a quarry, fish, and artificial snowflakes or on the attendance of certain environments such as the departments of a supermarket.

Advantageously, the method for monitoring images allows reducing the necessary computational cost and the use of resources by making the imaging device operable in situ, at the EDGE, requiring only a power supply. In particular, given the low cost of computation and of use of resource, the power supply can be supplied directly on site without the imaging device 20 being connected to a power line. For example, the power supply needed by the imaging device can be supplied by means of renewable energy, such as a solar panel, or pre-charged batteries.

Advantageously, the imaging device is economical in that it uses modules capable of implementing a method which optimises the use of resources.

**Claims**

1. Method for monitoring (100) targets (10) arranged in an environment (20) by means of an imaging device (30), said monitoring method (100) comprising the steps of:

   - defining (110) a reference system (Rif) with respect to the imaging device (30)
   - acquiring (120) by means of the imaging device (30):
   a first image stream related to the environment (20), each image of the first image stream being defined by a plurality of pixels;

     - a second image stream related to distance values (D) of the pixels from the reference system (Rif);
     - sending (130) the first image stream and the second image stream to a data processing unit (40);
     - recognizing (140) one or more targets (10) present in the images of the first image stream;
     - associating (150) a boundingbox (50) with each recognized target (10);
     - calculating (160) a significant distance value (Ds) of the boundingboxes with respect to the reference system (Rif) as a function of the second image stream;

   the step of calculating (160) a significant distance value (Ds) comprising the steps of:

     - checking (161) the availability of a distance value (D) for each pixel of each boundingbox (Box);
     - associating (162) for each pixel of each boundingbox (Box) a respective distance value (D), if available;
     - determining (162) each significant distance value (Ds) as a function of the pixels associated with a distance value (D);

   wherein the step (140) of recognizing one or more targets present in the images of the first image stream is performed by an algorithm based on neural networks resident in the data processing unit (40) of the imaging device (30),

**characterized in that** said algorithm is trained to recognize one or more targets (10) present in the images of the first image stream related to the environment (20) where the imaging device (30) is inserted, said step of recognizing (140) comprising the steps of:

- geolocating the imaging device (30) to recognize the environment (30) in which the imaging device (30) is inserted;
- loading the algorithm based on neural networks associated with the recognized environment suitable for the recognized environment.

2. Method for monitoring (100) targets (10) according to claim 1, wherein the method comprises an orientation step (170) of the boundingbox, said orientation step (170) comprising the steps of:

- associating (171) an outer perimeter (50a) with at least one boundingbox (50);
- selecting (172) at least two perimeter points (51, 52) on said outer perimeter (50a);
- determining (173) a reference axis (X-X) as a function of the target (10) recognized and associated with the related boundingbox (50);
- orientating (174) the outer perimeter (50a) of the boundingbox (50) on the target (10) as a function of the reference axis (X-X) and the perimeter points (51, 52).

3. Method for monitoring targets (100) according to claim 1 or 2, wherein the method comprises a step of defining in plan the contours of a recognized target (180) as a function of the first image stream, the step of defining the contours (180) comprising the steps of:

- selecting (181) at least one boundingbox (50) having an outer perimeter (50a);
- selecting (182) a starting area (60) on the recognized target (10) within the outer perimeter (50a) of the boundingbox (50);
- associating (183) with the starting area (60) first plan target parameters associated with the first image stream;
- selecting (184) a plurality of reference areas (70) within the outer perimeter (50a) of the boundingbox (50);
- associating (185) with each reference area (70) second plan target parameters associated with the first image stream;
- comparing (186) the first plan target parameters with the second plan target parameters;
- generating (187) a contour value if the comparison exceeds the first plan threshold parameters;
- delineating (188) the contour (80) of the target (10) as a function of the contour values.

4. Method for monitoring targets (100) according to one of claims 1 or 2, wherein the method comprises a step of defining in depth the contours of a recognized target (190) as a function of the second image stream, the step of defining the contours (190) comprising the steps of:

- selecting (191) at least one boundingbox (50) having an outer perimeter (50a);
- selecting (192) a starting area (60) on the recognized target (10) within the outer perimeter (50a) of the boundingbox (50);
- associating (193) with the starting area (60) first depth target parameters associated with the second image stream;
- selecting (194) a plurality of reference areas (70) within the outer perimeter (50a) of the boundingbox (50);
- associating (195) with each reference area (70) second depth target parameters associated with the second image stream;
- comparing (196) the first depth target parameters with the second depth target parameters;
- generating (197) a contour value if the comparison exceeds the depth threshold parameters;
- delineating (198) the contour (80) of the target as a function of the contour values.

5. Method for monitoring targets (100) according to claims 3 or 4, wherein the step of defining in plan the contours of a recognized target (180) and the step of defining in depth the contours of a recognized target (190) are performed by computer-vision based algorithms and/or depth-based algorithms.

6. Method for monitoring targets (100) according to claim 1 to 5, wherein the method comprises a step of calculating (200) the dimensions of the recognized targets as a function of the boundingbox (50) to which the relative pixels of the first image stream and/or the distance values (D) of the second image stream are associated.

7. Method for monitoring targets (100) according to any one of claims 1 to 6, wherein the method comprises a step of determining the relative distance between two or more targets identified by a boundingbox (210), said step of determining the relative distance between two or more targets identified by a boundingbox (210) comprising the steps of

- defining (211) for each boundingbox (50) at least one significant point (90) associating with said significant point (90) the significant distance value (Ds) related to the bounding box (50) and two spatial plan coordinates (A, B) with respect to the reference system (Rif);
- calculating (212) the relative distance (Dr) between the significant points (90) of each boundingbox (50);
- generating (213) an evaluation signal as a function of the distance between the significant points (90) of each boundingbox (50) and threshold evaluation values.

8. Method for monitoring targets (100) according to claim 7, wherein the step of calculating the distance between the significant points of each boundingbox (212) comprises the sub-steps of:

- determining (212a) a relative distance (Dr) in the space between two significant points (90);
- defining (212b) a calculation matrix by means of the squares of the relative distances (Dr) between significant points (90) of different boundingboxes (50).
- comparing (212c) the square of the distance (Ds) with the square of the evaluation threshold values.

9. Imaging device (30) configured to perform the method according to claims 1 to 8 and comprising:

- a camera (31) configured to acquire the first image stream and the second image stream;
- a processing unit (40) in signal communication with the camera (31).

**Patentansprüche**

1. Verfahren zum Überwachen (100) von in einer Umgebung (20) eingerichteten Zielen (10) mittels einer Bildgebungsvorrichtung (30), wobei das Überwachungsverfahren (100) die folgenden Schritte umfasst:

- Definieren (110) eines Referenzsystems (Rif) in Bezug auf die Bildgebungsvorrichtung (30)
- Erfassen (120) mittels der Bildgebungsvorrichtung (30):
eines ersten Bildstroms, der die Umgebung (20) betrifft, wobei jedes Bild des ersten Bildstroms durch eine Vielzahl von Pixeln definiert ist;

    - eines zweiten Bildstroms, der Abstandswerte (D) der Pixel vom Bezugssystem (Rif) betrifft;

- Senden (130) des ersten Bildstroms und des zweiten Bildstroms an eine Datenverarbeitungseinheit (40);
- Erkennen (140) eines oder mehrerer Ziele (10), die in den Bildern des ersten Bildstroms vorhanden sind;
- Zuordnen (150) einer Begrenzungsbox (50) zu jedem erkannten Ziel (10);
- Berechnen (160) eines signifikanten Abstandswerts (Ds) der Begrenzungsboxen in Bezug auf das Bezugssystem (Rif) als Funktion des zweiten Bildstroms;
wobei der Schritt des Berechnens (160) eines signifikanten Abstandswerts (Ds) die folgenden Schritte umfasst:

    - Überprüfen (161) der Verfügbarkeit eines Abstandswerts (D) für jedes Pixel jeder Begrenzungsbox (Box);
    - Zuordnen (162) eines jeweiligen Abstandswerts (D) für jedes Pixel jeder Begrenzungsbox (Box), falls verfügbar;
    - Bestimmen (162) jedes signifikanten Abstandswerts (Ds) als eine Funktion der Pixel, die einem Abstandswert (D) zugeordnet sind;

wobei der Schritt (140) des Erkennens eines oder mehrerer Ziele, die in den Bildern des ersten Bildstroms vorhanden sind, durch einen Algorithmus durchgeführt wird, der auf neuronalen Netzen basiert, die in der Datenverarbeitungseinheit (40) der Bildgebungsvorrichtung (30) resident sind; **dadurch gekennzeichnet, dass** der Algorithmus trainiert ist, ein oder mehrere Ziele (10) zu erkennen, die in den Bildern des ersten Bildstroms vorhanden sind, die die Umgebung (20) betreffen, in der die Bildgebungsvorrichtung (30) eingesetzt ist, wobei der Schritt des Erkennens (140) die folgenden Schritte umfasst:

- Geolokalisieren der Bildgebungsvorrichtung (30), um die Umgebung (30) zu erkennen, in der die Bildgebungsvorrichtung (30) eingesetzt ist;
- Laden des Algorithmus basierend auf neuronalen Netzen, die der erkannten Umgebung zugeordnet sind, die für die erkannte Umgebung geeignet ist.

2. Verfahren zum Überwachen (100) von Zielen (10) nach Anspruch 1, wobei das Verfahren einen Orientierungsschritt (170) der Begrenzungsbox umfasst, wobei der Orientierungsschritt (170) die folgenden Schritte umfasst:

- Zuordnen (171) eines Außenumfangs (50a) zu mindestens einer Begrenzungsbox (50);
- Auswählen (172) von mindestens zwei Umfangspunkten (51, 52) an dem Außenumfang (50a);
- Bestimmen (173) einer Referenzachse (X-X) als Funktion des erkannten und der zugehörigen Begrenzungsbox (50) zugeordneten Ziels (10);
- Ausrichten (174) des äußeren Umfangs (50a) der Begrenzungsbox (50) auf dem Ziel (10) in Abhängigkeit von der Referenzachse (X-X) und den Umfangspunkten (51, 52).

3. Verfahren zum Überwachen von Zielen (100) nach Anspruch 1 oder 2, wobei das Verfahren einen Schritt des Definierens der Konturen eines erkannten Ziels (180) im Grundriss als Funktion des ersten Bildstroms umfasst, wobei der Schritt des Definierens der Konturen (180) die folgenden Schritte umfasst:

- Auswählen (181) mindestens einer Begrenzungsbox (50) mit einem Außenumfang (50a);
- Auswählen (182) eines Startbereichs (60) auf dem erkannten Ziel (10) innerhalb des Außenumfangs (50a) der Begrenzungsbox (50);
- Zuordnen (183) von ersten Planzielparametern, die dem ersten Bildstrom zugeordnet sind, zu dem Startbereich (60);
- Auswählen (184) einer Vielzahl von Referenzbereichen (70) innerhalb des Außenumfangs (50a) der Begrenzungsbox (50);
- Zuordnen (185) von zweiten Planzielparametern, die dem ersten Bildstrom zugeordnet sind, zu jedem Referenzbereich (70);
- Vergleichen (186) der ersten Planzielparameter mit den zweiten Planzielparametern;
- Erzeugen (187) eines Konturwerts, wenn der Vergleich die ersten Planschwellenparameter überschreitet;
- Abgrenzen (188) der Kontur (80) des Ziels (10) in Abhängigkeit von den Konturwerten.

4. Verfahren zum Überwachen von Zielen (100) nach einem der Ansprüche 1 oder 2, wobei das Verfahren einen Schritt des tiefgehenden Definierens der Konturen eines erkannten Ziels (190) als Funktion des zweiten Bildstroms umfasst, wobei der Schritt des Definierens der Konturen (190) die folgenden Schritte umfasst:

- Auswählen (191) mindestens einer Begrenzungsbox (50) mit einem Außenumfang (50a);
- Auswählen (192) eines Startbereichs (60) auf dem erkannten Ziel (10) innerhalb des Außenumfangs (50a) der Begrenzungsbox (50);
- Zuordnen (193) erster Tiefenzielparametern, die dem zweiten Bildstrom zugeordnet sind, zu dem Startbereich (60);
- Auswählen (194) einer Vielzahl von Referenzbereichen (70) innerhalb des Außenumfangs (50a) der Begrenzungsbox (50);
- Zuordnen (195) zweiter Tiefenzielparameter, die dem zweiten Bildstrom zugeordnet sind, zu jedem Referenzbereich (70);
- Vergleichen (196) der ersten Tiefenzielparameter mit den zweiten Tiefenzielparametern;
- Erzeugen (197) eines Konturwerts, wenn der Vergleich die Tiefenschwellenparameter überschreitet;
- Abgrenzen (198) der Kontur (80) des Ziels in Abhängigkeit von den Konturwerten.

5. Verfahren zum Überwachen von Zielen (100) nach Anspruch 3 oder 4, wobei der Schritt des Definierens der Konturen eines erkannten Ziels (180) im Plan und der Schritt des Definierens der Konturen eines erkannten Ziels (190) in der Tiefe durch Computer-Vision-basierte Algorithmen und/oder tiefenbasierte Algorithmen durchgeführt werden.

6. Verfahren zum Überwachen von Zielen (100) nach Anspruch 1 bis 5, wobei das Verfahren einen Schritt des Berechnens (200) der Abmessungen der erkannten Ziele als eine Funktion der Begrenzungsbox (50), der die relativen Pixel des ersten Bildstroms und/oder die Abstandswerte (D) des zweiten Bildstroms zugeordnet sind, umfasst.

7. Verfahren zum Überwachen von Zielen (100) nach einem der Ansprüche 1 bis 6, wobei das Verfahren einen Schritt zum Bestimmen des relativen Abstands zwischen zwei oder mehr durch eine Begrenzungsbox (210) identifizierten Zielen aufweist, wobei der Schritt zum Bestimmen des relativen Abstands zwischen zwei oder mehr durch eine Begrenzungsbox (210) identifizierten Zielen die folgenden Schritte aufweist:

   - Definieren (211) für jede Begrenzungsbox (50) mindestens eines signifikanten Punkts (90), der dem signifikanten Punkt (90) den signifikanten Abstandswert (Ds) in Bezug auf die Begrenzungsbox (50) und zwei Raumplankoordinaten (A, B) in Bezug auf das Bezugssystem (Rif) zuordnet;
   - Berechnen (212) des relativen Abstands (Dr) zwischen den signifikanten Punkten (90) jeder Begrenzungsbox (50);
   - Erzeugen (213) eines Bewertungssignals als Funktion des Abstands zwischen den signifikanten Punkten (90) jeder Begrenzungsbox (50) und Schwellenbewertungswerten.

8. Verfahren zum Überwachen von Zielen (100) nach Anspruch 7, wobei der Schritt des Berechnens des Abstands zwischen den signifikanten Punkten jeder Begrenzungsbox (212) die folgenden Teilschritte umfasst:

   - Bestimmen (212a) eines relativen Abstands (Dr) in dem Raum zwischen zwei signifikanten Punkten (90);
   - Definieren (212b) einer Berechnungsmatrix mittels der Quadrate der relativen Abstände (Dr) zwischen signifikanten Punkten (90) verschiedener Begrenzungsboxen (50).
   - Vergleichen (212c) des Quadrats der Entfernung (Ds) mit dem Quadrat der Bewertungsschwellenwerte.

9. Bildgebungsvorrichtung (30), die dazu konfiguriert ist, das Verfahren nach den Ansprüchen 1 bis 8 durchzuführen, und Folgendes umfasst:

   - eine Kamera (31), die dazu konfiguriert ist, den ersten Bildstrom und den zweiten Bildstrom zu erfassen;
   - eine Verarbeitungseinheit (40) in Signalverbindung mit der Kamera (31).


**Revendications**

1. Procédé de surveillance (100) de cibles (10) disposées dans un environnement (20) au moyen d'un dispositif d'imagerie (30), ledit procédé de surveillance (100) comprenant les étapes consistant à :

   - définir (110) un système de référence (Rif) par rapport au dispositif d'imagerie (30)
   - acquérir (120) au moyen du dispositif d'imagerie (30) :
   un premier flux d'image lié à l'environnement (20), chaque image du premier flux d'image étant définie par une pluralité de pixels ;

      - un second flux d'image lié aux valeurs de distance (D) des pixels du système de référence (Rif) ;

   - envoyer (130) le premier flux d'image et le second flux d'image à une unité de traitement de données (40) ;
   - reconnaître (140) une ou plusieurs cibles (10) présentes dans les images du premier flux d'images ;
   - associer (150) un cadre de sélection (50) à chaque cible reconnue (10) ;
   - calculer (160) une valeur de distance significative (Ds) des cadres de sélection par rapport au système de référence (Rif) en fonction du second flux d'images ;
   l'étape consistant à calculer (160) une valeur de distance significative (Ds) comprenant les étapes consistant à :

      - vérifier (161) la disponibilité d'une valeur de distance (D) pour chaque pixel de chaque cadre de sélection (Box) ;
      - associer (162) pour chaque pixel de chaque cadre de sélection (Box) une valeur de distance respective (D), si disponible ;
      - déterminer (162) chaque valeur de distance significative (Ds) en fonction des pixels associés à une valeur de distance (D) ;

   dans lequel l'étape (140) de reconnaissance d'une ou plusieurs cibles présentes dans les images du premier flux d'images est effectuée par un algorithme basé sur des réseaux de neurones résidant dans l'unité de traitement de données (40) du dispositif d'imagerie (30),
   **caractérisé en ce que** ledit algorithme est formé pour reconnaître une ou plusieurs cibles (10) présentes dans les images du premier flux d'images liées à l'environnement (20) où le dispositif d'imagerie (30) est inséré, ladite étape de reconnaissance (140) comprenant les étapes consistant à :

- géolocaliser le dispositif d'imagerie (30) pour reconnaître l'environnement (30) dans lequel le dispositif d'imagerie (30) est inséré ;
- charger l'algorithme basé sur des réseaux de neurones associés à l'environnement reconnu adapté à l'environnement reconnu.

2. Procédé de surveillance (100) de cibles (10) selon la revendication 1, dans lequel le procédé comprend une étape d'orientation (170) du cadre de sélection, ladite étape d'orientation (170) comprenant les étapes consistant à :

- associer (171) un périmètre extérieur (50a) à au moins un cadre de sélection (50) ;
- sélectionner (172) au moins deux points de périmètre (51, 52) sur ledit périmètre extérieur (50a) ;
- déterminer (173) un axe de référence (X-X) en fonction de la cible (10) reconnue et associée au cadre de sélection associé (50) ;
- orienter (174) le périmètre extérieur (50a) du cadre de sélection (50) sur la cible (10) en fonction de l'axe de référence (X-X) et des points de périmètre (51, 52).

3. Procédé de surveillance de cibles (100) selon la revendication 1 ou 2, dans lequel le procédé comprend une étape de définition en plan des contours d'une cible reconnue (180) en fonction du premier flux d'image, l'étape de définition des contours (180) comprenant les étapes consistant à :

- sélectionner (181) au moins un cadre de sélection (50) ayant un périmètre extérieur (50a) ;
- sélectionner (182) une zone de départ (60) sur la cible reconnue (10) à l'intérieur du périmètre extérieur (50a) du cadre de sélection (50) ;
- associer (183) à la zone de départ (60) des premiers paramètres cibles de plan associés au premier flux d'images ;
- sélectionner (184) une pluralité de zones de référence (70) à l'intérieur du périmètre extérieur (50a) du cadre de sélection (50) ;
- associer (185) à chaque zone de référence (70) des seconds paramètres cibles de plan associés au premier flux d'images ;
- comparer (186) les premiers paramètres cibles du plan avec les seconds paramètres cibles du plan ;
- générer (187) une valeur de contour si la comparaison dépasse les premiers paramètres de seuil du plan ;
- délimiter (188) le contour (80) de la cible (10) en fonction des valeurs de contour.

4. Procédé de surveillance de cibles (100) selon l'une des revendications 1 ou 2, dans lequel le procédé comprend une étape de définition en profondeur des contours d'une cible reconnue (190) en fonction du second flux d'images, l'étape de définition des contours (190) comprenant les étapes consistant à :

- sélectionner (191) au moins un cadre de sélection (50) ayant un périmètre extérieur (50a) ;
- sélectionner (192) une zone de départ (60) sur la cible reconnue (10) à l'intérieur du périmètre extérieur (50a) du cadre de sélection (50) ;
- associer (193) à la zone de départ (60) des premiers paramètres de cible de profondeur associés au second flux d'images ;
- sélectionner (194) une pluralité de zones de référence (70) à l'intérieur du périmètre extérieur (50a) du cadre de sélection (50) ;
- associer (195) à chaque zone de référence (70) des seconds paramètres cibles de profondeur associés au second flux d'images ;
- comparer (196) les premiers paramètres cibles de profondeur avec les seconds paramètres cibles de profondeur ;
- générer (197) une valeur de contour si la comparaison dépasse les paramètres de seuil de profondeur ;
- délimiter (198) le contour (80) de la cible en fonction des valeurs de contour.

5. Procédé de surveillance de cibles (100) selon les revendications 3 ou 4, dans lequel l'étape consistant à définir en plan les contours d'une cible reconnue (180) et l'étape consistant à définir en profondeur les contours d'une cible reconnue (190) sont effectuées par des algorithmes basés sur la vision par ordinateur et/ou des algorithmes basés sur la profondeur.

**6.** Procédé de surveillance de cibles (100) selon les revendications 1 à 5, dans lequel le procédé comprend une étape de calcul (200) des dimensions des cibles reconnues en fonction du cadre de sélection (50) à laquelle les pixels relatifs du premier flux d'image et/ou les valeurs de distance (D) du second flux d'image sont associés.

**7.** Procédé de surveillance de cibles (100) selon l'une quelconque des revendications 1 à 6, dans lequel le procédé comprend une étape de détermination de la distance relative entre deux ou plusieurs cibles identifiées par un cadre de sélection (210), ladite étape de détermination de la distance relative entre deux ou plusieurs cibles identifiées par un cadre de sélection (210) comprenant les étapes consistant à

- définir (211) pour chaque cadre de sélection (50) au moins un point significatif (90) associant audit point significatif (90) la valeur de distance significative (Ds) liée au cadre de sélection (50) et deux coordonnées de plan spatial (A, B) par rapport au système de référence (Rif) ;
- calculer (212) la distance relative (Dr) entre les points significatifs (90) de chaque cadre de sélection (50) ;
- générer (213) un signal d'évaluation en fonction de la distance entre les points significatifs (90) de chaque cadre de sélection (50) et les valeurs d'évaluation de seuil.

**8.** Procédé de surveillance de cibles (100) selon la revendication 7, dans lequel l'étape de calcul de la distance entre les points significatifs de chaque cadre de sélection (212) comprend les sous-étapes consistant à :

- déterminer (212a) une distance relative (Dr) dans l'espace entre deux points significatifs (90) ;
- définir (212b) une matrice de calcul au moyen des carrés des distances relatives (Dr) entre des points significatifs (90) de différents cadres de sélection (50).
- comparer (212c) le carré de la distance (Ds) avec le carré des valeurs de seuil d'évaluation.

**9.** Dispositif d'imagerie (30) configuré pour mettre en œuvre le procédé selon les revendications 1 à 8 et comprenant :

- une caméra (31) configurée pour acquérir le premier flux d'images et le second flux d'images ;
- une unité de traitement (40) en communication de signal avec la caméra (31).

Fig. 1

Fig. 2

110

↓

120

↓

130

↓

220

↓

221

↓

140

↓

150

↓

160

↓

230

↓

| 210 |
|---|
| 211 |
| 212 |
| 212a |
| 212b |
| 212c |

↓

250

Fig.3

30

Redis

Framesplitter

Detect

Caliper

40

Fig.4

31

30

Redis

Framesplitter

Detect

Measure

Alarm

40

Fig.5

31

Fig.6

Fig.7

Fig.8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HANWEN KANG ; CHAO CHEN**. *Real-time Fruit Recognition and Grasp Estimation for Autonomous Apple harvesting*, 2020

- **ADARSH JAGAN SATHYAMOORTHY**. *COVID-Robot: Monitoring Social Distancing Constraints in Crowded Scenarios*, 2020